# FASCICULE DE BREVET EUROPEEN

(11) **EP 1 648 815 B1**
(45) Date de publication et mention de la délivrance du brevet: **23.04.2008**
(21) Numéro de dépôt: 04767919.6
(22) Date de dépôt: 27.07.2004
(51) Int. Cl.: C01B 3/00, H01M 8/04

(54) **RESERVOIR D'HYDROGENE A BASE DE NANO-STRUCTURES DE SILICIUM**
WASSERSTOFFSPEICHERMEDIUM AUF BASIS VON SILICIUMNANOSTRUKTUREN
HYDROGEN STORAGE MEDIUM BASED ON SILICON NANOSTRUCTURES

(30) Priorité: 28.07.2003 FR 0350375
(43) Date de publication de la demande: 26.04.2006
(73) Titulaire: CENTRE NATIONAL DE LA RECHERCHE SCIENTIFIQUE (CNRS), 75794 Paris Cedex 16 (FR); Institut National Polytechnique de Toulouse (I.N.P.T), 31029 Toulouse cedex 4 (FR)
(72) Inventeur: LYSENKO, Volodymyr, F-69100 Villeurbanne (FR); TURPIN, Christophe, Jean-Paul, Philippe, F-31100 Toulouse (FR)
(74) Mandataire: Texier, Christian
(86) Numéro de dépôt international: PCT/FR2004/050358
(87) Numéro de publication internationale: WO 2005/012163

(56) Documents cités:
- EP-A- 0 025 858
- US-A- 4 265 720
- US-A- 5 906 792

## Description

### DOMAINE TECHNIQUE

La présente invention concerne un réservoir d'hydrogène, à pression atmosphérique, à base de nano-structures de silicium. Elle s'applique en particulier au domaine des piles à combustible (nano-, micro- et macro-piles). Elle peut également s'appliquer au domaine des moteurs à hydrogène (nano-, micro- et macro-moteurs).

### ETAT DE LA TECHNIQUE ANTERIEURE

L'hydrogène est actuellement un vecteur énergétique très fortement pressenti. Son stockage constitue un des points cruciaux du développement des piles à combustible, quel que soit le type d'application, ou des dispositifs de taille réduite.

Il est connu de stocker de l'hydrogène dans des réservoirs cryogéniques ou sous pression. Ces solutions ne sont pas compatibles, et raisonnablement envisageables, dans certains domaines et en particulier pour des dispositifs portables (téléphones, ordinateurs, petits dispositifs électroniques). Ce constat est valable dans une moindre mesure dans le domaine des transports terrestres. Il n'est en effet pas aisé de réaliser des réservoirs sous les très hautes pressions (supérieures à 500 bars) nécessaires pour disposer d'une autonomie suffisante. De plus, le stockage sous très haute pression pose clairement le problème de la sécurité. Quant aux solutions cryogéniques, elles sont pénalisées par le mauvais rendement du procédé de liquéfaction de l'hydrogène.

Pour tout type d'application, de nombreux industriels essaient de contourner les difficultés de stockage de l'hydrogène pur en utilisant des combustibles intermédiaires (méthanol, gaz naturel, hydrocarbures...) qui imposent une opération de reformage pour extraire localement l'hydrogène. Le reformage de combustibles intermédiaires soulève principalement un problème de pollution (dégagement de gaz carbonique) et un problème de rendement énergétique global du système. De plus, il semble, concernant le méthanol, que des dispositions vont être prises en Europe pour limiter son utilisation au regard de sa toxicité vis-à-vis des nappes phréatiques entre autres.

De manière industrielle, le stockage à pression atmosphérique de l'hydrogène est possible dans des réservoirs utilisant des hydrures métalliques solides. Ces matériaux offrent à priori des perspectives intéressantes mais ils ont comme inconvénient leur faible énergie massique.

De façon plus futuriste, des travaux sont actuellement menés sur le stockage de l'hydrogène dans des nanotubes de carbone. Malgré les perspectives très prometteuses des nanotubes de carbone, il reste à résoudre le problème de leur fabrication massive.

De façon générale, concernant le stockage de l'hydrogène, on peut se référer au document suivant : « Hydrogen Storage », MRS Bulletin, volume 27, N° 9, septembre 2002, pages 675 à 716. Le document EP-A-0025858 décrit un réservoir d'hydrogène à base de silicium amorphe.

L'hydrogène est de plus en plus considéré comme une solution intéressante comme source énergétique dans le cadre d'un développement durable et d'une entrée dans une ère de raréfaction des combustibles fossiles et fissibles.

Par ailleurs, il a été observé que les nano-structures du silicium méso-poreux et nano-poreux sont susceptibles de retenir l'hydrogène à la pression atmosphérique, sous forme de liaisons Si -Hₓ (x pouvant prendre les valeurs 1, 2 ou 3) suite au contact avec une solution d'acide fluorhydrique utilisée pendant un procédé d'anodisation. Cependant, aucune mesure expérimentale de la possibilité que présente le silicium de ces structures à retenir l'hydrogène n'a été effectuée. De même, aucune étude sur l'influence de la morphologie poreuse à nano-échelle sur la capacité de stockage n'a été menée. Cette capacité à stocker l'hydrogène n'est a priori pas dépendante de la nature de l'acide utilisé. On peut se référer à ce sujet aux documents suivants :
- « Chemical composition of fresh porous silicon » de A. Grosman et al., dans « Properties of porous silicon », édité par L. Canham, INSPEC, Londres, Royaume-Uni, 1997, pages 145 à 153 ;
- « Strong explosive interaction of hydrogenated porous silicon with oxygen at cryogenic temperatures » de D. Kovaler et al., Physical Review Letters, Volume 87, N° 6, août 2001, 068301.

Après des estimations théoriques, les auteurs de ces articles parviennent à la conclusion que la capacité de stockage d'hydrogène sur de telles structures n'est pas élevée.

### EXPOSÉ DE L'INVENTION

Pour remédier aux inconvénients de l'art antérieur, l'invention propose un nouveau réservoir d'hydrogène dont les capacités volumique et massique de stockage de l'hydrogène sont comparables ou meilleures que celles des moyens de stockage actuels. Le stockage peut être obtenu de manière simple et à pression atmosphérique, ce qui est un gage de sécurité. Ce réservoir peut être fabriqué en quantités massives et à bas coûts par les techniques bien connues de l'industrie du silicium. La fabrication de ce réservoir est compatible avec diverses technologies de réalisation de piles à combustible de différentes gammes de puissance.

L'invention a donc pour un obj et un réservoir d'hydrogène comprenant une substance apte à stocker l'hydrogène, caractérisé en ce que ladite substance est constituée de silicium nano-structuré tel que défini dans la revendication 1.

Par silicium nano-structuré, on entend une nano-structure présentant une surface spécifique élevée (plus grande que 100 m²/cm³), c'est-à-dire une nano-structure qui contient des nano-cristallites ou des nano-particules de silicium de diverses formes géométriques, interconnectées ou non entre elles, dont au moins une dimension est inférieure ou égale à 100 nm et dont la somme des surfaces de chaque nano-cristallite et/ou nano-particule est plus grande que la surface planaire occupée par la nano-structure.

Avantageusement, ladite substance est constituée de nanostructures de silicium méso-poreux et/ou nano-poreux.

La morphologie initiale du silicium à nano-structurer peut être choisie parmi le silicium monocristallin, le silicium polycristallin et le silicium amorphe.

Selon un mode particulièrement avantageux la substance est constituée de silicum nano-structuré, poreux et compacté ou, plus avantageusement encore, de silicium nano-sructuré, poreux, broyé et compacté.

L'invention a également pour objet un procédé de fabrication d'un réservoir d'hydrogène, caractérisé en ce qu'il consiste à porosifier du silicium pour obtenir des nano-structures de silicium méso-poreux ou nano-poreux et à y stocker de l'hydrogène en créant des liaisons chimiques entre l'hydrogène et le silicium.

La création des liaisons chimiques entre l'hydrogène et le silicium peut être obtenue par l'intermédiaire d'un acide.

Le procédé de fabrication peut consister à faire subir à du silicium monocristallin, polycristallin ou amorphe une anodisation électrochimique mettant en oeuvre un acide et permettant d'obtenir simultanément la porosification du silicium et le stockage de l'hydrogène.

L'acide mis en oeuvre peut être de l'acide fluorhydrique.

Le procédé de fabrication peut comprendre en outre une étape postérieure consistant à compacter (c'est-à-dire à supprimer le vide entre les nano-cristallites) le silicium nano-structuré. Il peut aussi comprendre, avant l'étape de compactage, une étape de broyage du silicium nano-structuré. L'étape de broyage permet d'obtenir une poudre de silicium nano-structuré.

L'invention a encore pour objet un procédé d'utilisation d'un réservoir d'hydrogène tel que défini ci-dessus, caractérisé en ce que de l'hydrogène étant stocké dans le réservoir, le procédé comprend une étape consistant à provoquer la rupture des liaisons chimiques entre l'hydrogène et le silicium pour extraire l'hydrogène.

La rupture des liaisons chimiques entre l'hydrogène et le silicium peut être provoquée par un apport d'énergie choisie parmi l'énergie chimique, l'énergie thermique, l'énergie mécanique (par exemple dégagée à la suite d'une compression), l'énergie d'un rayonnement et l'énergie d'un champ électrique.

Avantageusement, le procédé d'utilisation comprend une étape de recharge du réservoir consistant à mettre en contact ladite substance avec un acide.

L'invention a encore pour objet un système à pile à combustible, une pile à combustible, un système à moteur à hydrogène ou un moteur à hydrogène comprenant un tel réservoir d'hydrogène.

### EXPOSÉ DÉTAILLÉ DE MODES DE RÉALISATION PARTICULIERS

La porosification du silicium, monocristallin, polycristallin ou amorphe, à l'échelle nanométrique par anodisation électrochimique permet la création de pores nanométriques entraînant la fragilisation de sa structure initiale, fragilisation qui est exploitée avantageusement par l'invention. La taille des nano-cristaux obtenus et le niveau de fragilisation de la couche nano-structurée sont déterminés en fonction du substrat choisi initialement et des paramètres d'anodisation (courant d'anodisation, composition de la solution électrochimique). Deux morphologies typiques peuvent être obtenues qui peuvent être désignées sous les expressions « nano-éponge » et « nano-colonne ».

Cette opération d'anodisation électrochimique du silicium comprenant le contact avec un acide, par exemple l'acide fluorhydrique, permet le stockage d'hydrogène à la pression atmosphérique sous forme de liaisons Si-Hₓ (x pouvant prendre les valeurs 1, 2 ou 3). L'efficacité de ce stockage atteint expérimentalement le niveau d'environ 3 millimoles par cm³ (pour les nano-colonnes) sans aucune optimisation du procédé. Ces valeurs peuvent être augmentées théoriquement d'un facteur 10, c'est-à-dire atteindre 30 millimoles par cm³, en utilisant le silicium nano-poreux (du type nano-éponge). Ceci s'explique par la taille des nano-cristallites qui est environ 10 fois inférieure à celle des nano-cristallites de silicium méso-poreux (à porosité équivalente). Autrement dit, cela conduit à la multiplication par 10 de la surface spécifique de stockage et donc à la multiplication par 10 du nombre d'atomes d'hydrogène stockés sur les atomes de silicium situés à la surface des nano-cristallites.

On peut avancer que la taille des nano-cristaux pour le silicium méso-poreux se situe entre 7 et 100 nm et que la taille des nano-cristaux pour le silicium nano-poreux se situe entre 1 et 7 nm.

En supposant que chaque atome de silicium situé à la surface des nanocristallites peut se lier seulement avec un atome d'hydrogène, on estime que la valeur maximale du nombre de moles d'hydrogène stockables dans le silicium méso-poreux est de 12 millimoles par cm³ et dans le silicium nano-poreux de 120 millimoles par cm³.

La capacité de stockage théorique de 120 millimoles par cm³ dans le silicium nano-poreux conduit déjà à des valeurs concurrentes de solutions actuelles de stockage (hydrures métalliques solides et méthanol) comme le montre le tableau I ci-après. Cependant, ces capacités de stockage dans le silicium méso-poreux et dans le silicium nano-poreux peuvent être nettement améliorées par leur broyage et/ou leur compactage.

Le compactage consiste à éliminer le vide (les nano-pores) séparant les nano-cristallites en compressant ces nano-structures poreuses. Cette procédure permet de diminuer le volume occupé par le silicium chargé d'hydrogène en conservant la même masse. Le gain maximal théorique sur la capacité de stockage d'hydrogène par unité de volume est donné par la relation 1/(1-P) où P la porosité initiale. Par exemple, pour une porosité de 75%, la capacité de stockage est théoriquement multipliée par 4 après ce compactage.

A priori, la procédure de compactage est relativement simple et ne nécessite pas de dispositifs onéreux.

Le broyage consiste à casser les nano-structures poreuses en les écrasant de manière contrôlée. Il peut être effectué, par exemple, en utilisant des appareils existant dans le commerce et prévus pour broyer d'autres matériaux. Les inventeurs de la présente invention ont démontré que certaines morphologies nano-structurées peuvent être très facilement broyées, même manuellement par simple frittage entre deux surfaces polies.

La granulométrie de la « nano-poussière » obtenue ainsi (la nano-poussière est l'état des nano-structures poreuses après le broyage) dépend de la morphologie de la nano-structure poreuse initiale, ainsi que des paramètres de broyage. De plus, la granulométrie peut être modifiée si les nano-structures sont traitées par un moyen physico-chimique avant le broyage.

La capacité de stockage d'hydrogène est alors améliorée d'un facteur 1+2(1-P)² où P est la porosité initiale. Par exemple, pour une porosité de 75%, la capacité de stockage augmente théoriquement dé 12,5% après broyage.

L'opération de broyage sera suivie d'un compactage de la nano-poussière obtenue.

Le tableau I regroupe les performances théoriques du réservoir d'hydrogène selon l'invention en fonction des nano-structures dérivées du silicium poreux.

**Tableau I**

| **Nano-structures du silicium poreux constituant le réservoir** | **Silicium méso-poreux** | **Silicium nano-poreux** | **Silicium méso-poreux compacté** | **Silicium nano-poreux compacté** | **Poussière de silicum compactée** |
|---|---|---|---|---|---|
| **Nombre THEORIQUE de moles de H₂ par cm³** | 6 millimoles | 60 millimoles | 24 millimoles | 240 millimoles | 270 millimoles |
| **ρᵥ(H₂) (kgH₂ m⁻³)** | 12 | 120 | 48 | 480 | 540 |
| **ρₘ(H₂)(% masse)** | 2 | 17 | 7,6 | 45 | 48 |

Pour ce tableau, les calculs ont été faits pour une porosité de 75% pour toutes les technologies de silicium.

Le tableau II compare les performances théoriques du réservoir d'hydrogène selon l'invention en fonction des nano-structures dérivées du silicium poreux utilisées par rapport aux moyens de stockage de l'art connu dans l'application piles à combustible.

**Tableau II**

| | **Technologie** | **énergie volumique disponible (Wh/l)** | **énergie massique disponible (Wh/kg)** |
|---|---|---|---|
| **invention** | silicium méso-poreux + H₂ | 475 | 800 |
| | silicum nano-poreux + H₂ | 4760 | 6775 |
| | silicium méso-poreux compacté+H₂ | 1900 | 3020 |
| | silicium nano-poreux compacté+H₂ | 19040 | 17920 |
| | nano-poussière de silicum compactée+H₂ | 21420 | 19080 |
| **art connu** | Hydrogène gazeux | X | 39670 |
| | Hydrogène liquide* | 2500 | 33000 |
| | hydrures métalliques solides* | 3300 | 370 |
| | nanotubes de carbone* | 32000 | 16000 |
| | méthanol* | 4900 | 6200 |

| | | | |
|---|---|---|---|
| * ordres de grandeur figurant dans la littérature (aucune information sur le calcul n'étant disponible). | | | |

Pour ce tableau, les calculs ont été faits pour une porosité de 75% pour toutes les technologies du silicium. La masse de l'empaquetage du réservoir n'est pas prise en compte.

A l'analyse de ce tableau, on constate que le silicium nano-poreux offre déjà des potentialités comparables à celles des hydrures métalliques solides et du méthanol. De plus, il est clair que la procédure de compactage améliore considérablement les potentialités de stockage de l'hydrogène, rendant le silicium méso-poreux beaucoup plus intéressant et plaçant le silicium nano-poreux parmi les meilleures solutions.

Un réservoir d'hydrogène (hors empaquetage) à base de poussière de silicium compactée de 34,7 cm³ et de 39 g, selon l'invention, peut alimenter théoriquement un téléphone portable consommant 1W pendant un mois.

L'extraction de l'hydrogène du réservoir selon l'invention, en vue de son utilisation, peut être obtenue par un traitement thermique du réservoir ou un traitement chimique (par exemple avec de l'éthanol). Il peut également être obtenu par application d'un rayonnement (par exemple ultra-violet), d'un champ électrique ou d'une énergie mécanique (par exemple une compression).

Une fois vidé par un moyen quelconque, le réservoir d'hydrogène selon l'invention peut être rechargé par un simple contact avec un acide.

Pour donner un ordre de grandeur des potentialités de production en masse, on estime qu'il faudrait anodiser une cinquantaine de plaquettes de silicium de 30 cm de diamètre, sur 500 µm d'épaisseur, pour obtenir 1 kg de nano-structures de silicium poreux. Ceci est facilement réalisable dans le milieu industriel.

## Revendications

1. Réservoir d'hydrogène comprenant une substance apte à stocker l'hydrogène, **caractérisé en ce que** ladite substance est constituée de silicium nano-structuré, c'est-à-dire une nano-structure présentant une surface spécifique plus grande que 100 m²/cm³, la nano-structure contenant des nano-cristallites ou des nano-particules de silicium de diverses formes géométriques, interconnectées ou non entre elles, dont au moins une dimension est inférieure ou égale à 100 nm et dont la somme des surfaces de chaque nano-cristallite et/ou nano-particule est plus grande que la surface planaier occupée par la nano-structure.

2. Réservoir d'hydrogène selon la revendication 1, **caractérisé en ce que** ladite substance est constituée de nanostructures de silicium méso-poreux et/ou nano-poreux.

3. Réservoir d'hydrogène selon l'une des revendications 1 ou 2, **caractérisé en ce que** ladite substance est constituée de silicium nano-structuré, poreux et compacté.

4. Réservoir d'hydrogène selon l'une des revendications 1 ou 2, **caractérisé en ce que** ladite substance est constituée de silicium nano-structuré, poreux, broyé et compacté.

5. Procédé de fabrication d'un réservoir d'hydrogène, **caractérisé en ce qu'**il consiste à porosifier du silicium pour obtenir des nano-structures de silicium méso-poreux et/ou nano-poreux et à y stocker de l'hydrogène en créant des liaisons chimiques entre l'hydrogène et le silicium.

6. Procédé de fabrication selon la revendication 5, **caractérisé en ce que** la création des liaisons chimiques entre l'hydrogène et le silicium est obtenue par l'intermédiaire d'un acide.

7. Procédé de fabrication selon le revendication 5, **caractérisé en ce qu'**il consiste à faire subir à du silicium monocristallin, polycristallin ou amorphe une anodisation électrochimique mettant en oeuvre un acide et permettant d'obtenir simultanément la porosification du silicium et le stockage de l'hydrogène.

8. Procédé selon la revendication 7,
**caractérisé en ce que** l'acide mis en oeuvre est de l'acide fluorhydrique.

9. Procédé selon l'une quelconque des revendications 5 à 8, **caractérisé en ce qu'**il comprend en outre une étape postérieure consistant à compacter le silicium nano-structuré.

10. Procédé selon la revendication 9,
**caractérisé en ce qu'**il comprend en outre, avant l'étape de compactage, une étape de broyage du silicium nano-structuré.

11. Procédé d'utilisation d'un réservoir d'hydrogène selon l'une quelconque des revendications 1 à 4, **caractérisé en ce que** de l'hydrogène étant stocké dans le réservoir, le procédé comprend une étape consistant à provoquer la rupture des liaisons chimiques entre l'hydrogène et le silicium pour extraire l'hydrogène.

12. Procédé d'utilisation selon la revendication 11, **caractérisé en ce que** la rupture des liaisons chimiques entre l'hydrogène et le silicium est provoquée par un apport d'énergie choisie parmi l'énergie chimique, l'énergie thermique, l'énergie mécanique, l'énergie d'un rayonnement et l'énergie d'un champ électrique.

13. Procédé d'utilisation selon l'une des revendications 11 ou 12, **caractérisé en ce qu'**il comprend une étape de recharge du réservoir consistant à mettre en contact ladite substance avec un acide.

14. Système à pile à combustible ou pile à combustible comprenant un réservoir d'hydrogène selon l'une quelconque des revendications 1 à 4.

15. Système à moteur à hydrogène ou moteur à hydrogène comprenant un réservoir d'hydrogène selon l'une quelconque des revendications 1 à 4.

## Claims

1. A hydrogen storage medium comprising a substance suitable for storing hydrogen, **characterised in that** said substance is constituted by nano-structured silicon, that is, a nano-structure having a specific surface greater than 100 m²/cm³, the nano-structure containing nano-crystallites or nanoparticles of silicon of various geometric shapes, interconnected or not, whereof at least one dimension is less than or equal to 100 nm and whereof the sum of the surfaces of each nano-crystallite is greater than the planar surface occupied by the nano-structure.

2. The hydrogen storage medium according to claim 1, **characterised in that** said substance is constituted by meso-porous and/or nano-porous silicon nanostructures.

3. The hydrogen storage medium according to any one of claims 1 or 2, **characterised in that** said substance is constituted by nano-structured, porous and compacted silicon.

4. The hydrogen storage medium according to any one of claims 1 or 2, **characterised in that** said substance is constituted by nano-structured, porous, crushed and compacted silicon.

5. A manufacturing process for a hydrogen storage medium, **characterised in that** it consists of porosifying silicon to obtain nano-structures of meso-porous and/or nano-porous silicon and storing hydrogen therein by creating chemical bonds between the hydrogen and the silicon.

6. The manufacturing process according to claim 5, **characterised in that** the chemical bonds between the hydrogen and the silicon are created by means of an acid.

7. The manufacturing process according to claim 5, **characterised in that** it consists of subjecting monocrystalline, polycrystalline or amorphous silicon to electrochemical anodisation using an acid and simultaneously obtaining the porosification of the silicon and the storage of the hydrogen.

8. The process according to claim 7,
**characterised in that** the acid used is hydrofluoric acid.

9. The process according to any one of claims 5 to 8, **characterised in that** it further comprises a subsequent step consisting of compacting the nano-structured silicon.

10. The process according to claim 9,
**characterised in that** it further comprises, prior to the compacting step, a grinding step of the nano-structured silicon.

11. A process for using a hydrogen storage medium according to any one of claims 1 to 4, **characterised in that** with hydrogen stored in the storage medium, the process comprises a step consisting of causing the break of chemical bonds between the hydrogen and the silicon to extract the hydrogen.

12. The process for using according to claim 11, **characterised in that** the break of the chemical bonds between hydrogen and silicon is caused by an energy supply selected from among chemical energy, thermal energy, mechanical energy, radiated energy and energy from an electric field.

13. The process for using according to any of claims 11 or 12, **characterised in that** it comprises a recharging step of the storage medium consisting of placing said substance in contact with an acid.

14. A fuel cell system or a fuel cell comprising a hydrogen storage medium according to any one of claims 1 to 4.

15. A hydrogen motor system or hydrogen motor comprising a hydrogen storage medium according to any one of claims 1 to 4.

## Patentansprüche

1. Wasserstoffreservoir, umfassend eine Substanz, die dazu geeignet ist, Wasserstoff zu speichern, **dadurch gekennzeichnet, dass** die Substanz aus Silicium mit Nanostruktur besteht, das heißt einer Nanostruktur, die eine spezifische Oberfläche von mehr als 100 m²/cm³ aufweist, wobei die Nanostruktur Nanokristallite oder Nanoteilchen von Silicium mit verschiedenen geometrischen Formen enthält, die untereinander verbunden oder nicht verbunden sind, wobei mindestens eine Abmessung derselben weniger als oder gleich 100 nm beträgt und die Summe der Oberflächen von jedem Nanokristallit und/oder Nanoteilchen größer ist als die planare Oberfläche, die von der Nanostruktur eingenommen wird.

2. Wasserstoffreservoir nach Anspruch 1, **dadurch gekennzeichnet, dass** die Substanz aus Nanostrukturen von mesoporösem und/oder nanoporösem Silicium besteht.

3. Wasserstoffreservoir nach einem der Ansprüche 1 oder 2, **dadurch gekennzeichnet, dass** die Substanz aus porösem und kompaktiertem Silicium mit Nanostruktur besteht.

4. Wasserstoffreservoir nach einem der Ansprüche 1 oder 2, **dadurch gekennzeichnet, dass** die Substanz aus porösem, gemahlenem und kompaktiertem Silicium mit Nanostruktur besteht.

5. Verfahren zur Herstellung eines Wasserstoffreservoirs, **dadurch gekennzeichnet, dass** es darin besteht, Silicium porös zu machen, um Nanostrukturen von mesoporösem und/oder nanoporösem Silicium zu erhalten und darin Wasserstoff zu speichern, indem chemische Bindungen zwischen dem Wasserstoff und dem Silicium geschaffen werden.

6. Herstellungsverfahren nach Anspruch 5, **dadurch gekennzeichnet, dass** die Schaffung der chemischen Bindungen zwischen dem Wasserstoff und dem Silicium durch die Vermittlung einer Säure erhalten wird.

7. Herstellungsverfahren nach Anspruch 5, **dadurch gekennzeichnet, dass** es darin besteht, monokristallines, polykristallines oder amorphes Silicium einer elektrochemischen Eloxierung zu unterziehen, welche eine Säure einsetzt und es ermöglicht, gleichzeitig die Porösmachung des Siliciums und die Speicherung von Wasserstoff zu erhalten.

8. Verfahren nach Anspruch 7, **dadurch gekennzeichnet, dass** die eingesetzte Säure Fluorwasserstoffsäure ist.

9. Verfahren nach irgendeinem der Ansprüche 5 bis 8, **dadurch gekennzeichnet, dass** es darüber hinaus einen anschließenden Schritt umfasst, der darin besteht, das Silicium mit Nanostruktur zu kompaktieren.

10. Verfahren nach Anspruch 9, **dadurch gekennzeichnet, dass** es darüber hinaus vor dem Schritt der Kompaktierung einen Schritt des Mahlens des Siliciums mit Nanostruktur umfasst.

11. Verfahren zur Verwendung eines Wasserstoffreservoirs nach irgendeinem der Ansprüche 1 bis 4, **dadurch gekennzeichnet, dass**, während Wasserstoff in dem Reservoir gespeichert ist, das Verfahren einen Schritt umfasst, der darin besteht, das Brechen von chemischen Bindungen zwischen dem Wasserstoff und dem Silicium hervorzurufen, um den Wasserstoff zu extrahieren.

12. Verfahren zur Verwendung nach Anspruch 11, **dadurch gekennzeichnet, dass** das Brechen von chemischen Bindungen zwischen dem Wasserstoff und dem Silicium durch eine Zufuhr von Energie hervorgerufen wird, die ausgewählt ist aus chemischer Energie, thermischer Energie, mechanischer Energie, Strahlungsenergie und Energie eines elektrischen Felds.

13. Verfahren zur Verwendung nach einem der Ansprüche 11 oder 12, **dadurch gekennzeichnet, dass** es einen Schritt der Wiederaufladung des Reservoirs umfasst, der darin besteht, die Substanz mit einer Säure in Kontakt zu bringen.

14. System mit einer Brennstoffzelle oder Brennstoffzelle, umfassend ein Wasserstoffreservoir nach irgendeinem der Ansprüche 1 bis 4.

15. System mit einem Wasserstoffmotor oder Wasserstoffmotor, umfassend ein Wasserstoffreservoir nach irgendeinem der Ansprüche 1 bis 4.
